# EUROPÄISCHE PATENTSCHRIFT

(11) **EP 0 829 549 B1**
(45) Veröffentlichungstag und Bekanntmachung des Hinweises auf die Patenterteilung: **11.04.2001**
(21) Anmeldenummer: 97112263.5
(22) Anmeldetag: 17.07.1997
(51) Int. Cl.: C22B 3/44, C25B 1/26, C01D 3/16

(54) **Verfahren zur Entfernung von Schwermetallspuren aus konzentrierter Alkalichloridlösung bis in den Bereich von 0,01 ppm**
Process for the removal of heavy metal impurities from a concentrated alkali chloride solution down to a rest value of 0,01 ppm
Procédé pour éliminer des impuretés de métaux lourds d'une solution de chlorure alcalin concentrée jusqu'à des valeurs de l'ordre de 0,01 ppm

(30) Priorität: 14.09.1996 DE 19637576
(43) Veröffentlichungstag der Anmeldung: 18.03.1998
(73) Patentinhaber: Degussa-Hüls Aktiengesellschaft, 60287 Frankfurt am Main (DE)
(72) Erfinder: Hamann, Carl Heinz, Prof. Dr., 26939 Ovelgönne (DE); Helling, Jörg, 26121 Oldenburg (DE); Schmittinger, Peter, Dr., 53859 Niederkassel (DE); Scholz, Stefan, 50321 Brühl (DE)

(56) Entgegenhaltungen:
- DE-A- 2 613 128
- DE-A- 3 437 137
- DATABASE WPI Section Ch, Week 8809 Derwent Publications Ltd., London, GB; Class E37, AN 88-062610 XP002050475 & SU 1 325 015 A (BONDARENKO N V) , 23.Juli 1987
- G.R. LEGENDRE ET AL.: "Removal of dissolved molybdenum from wastewaters by precipitates of ferric iron" ENVIRONMENTAL SCIENCE AND TECHNOLOGY, Bd. 9, Nr. 8, August 1975, Seiten 744-749, XP002050474
- PATENT ABSTRACTS OF JAPAN vol. 011, no. 124 (C-416), 17.April 1987 & JP 61 263607 A (TOKUYAMA SODA CO LTD), 21.November 1986
- DATABASE WPI Section Ch, Week 7939 Derwent Publications Ltd., London, GB; Class E36, AN 79-71431B XP002050476 & SU 640 755 A (CENT ASIA GAS UTILI) , 8.Januar 1979

## Beschreibung

Beim Betrieb einer Chlor-Alkali-Elektrolyse nach dem Amalgamverfahren können durch die Anwesenheit von Schwermetallionen starke Betriebsstörungen auftreten. Diese Metalle bewirken eine Herabsetzung der Wasserstoffüberspannung, so daß anstelle der Amalgambildung Wasserstoffentwicklung auftritt. Schon geringe Mengen an Eisen, Kobalt, Nickel und Wolfram bewirken einen erhöhten Wasserstoffgehalt im Chlor. Auch kleine Mengen Calcium, Magnesium, Aluminium oder Barium können einen Anstieg des Wasserstoffgehalts im Chlor bewirken.

Die gravierendsten Effekte sind jedoch bei Vanadium, Molybdän und Chrom, die bereits in Spuren (ppb) stark wirksam sind, zu beobachten. Die Elemente Cr, Ni, V und Mo können sich in der Betriebsole anreichern, da sie bzw. ihre Verbindungen bei der üblichen alkalischen Karbonatfällung nicht mehr erfaßt werden und da die Sole im Kreislauf geführt wird.

Gemäß der Druckschrift DE-A-3 437 137 werden Quecksilber enthaltende Kochsalzlösungen gereinigt durch Zugabe von Eisensälzen bei pH-Werten von 8-14.

Der Erfindung lag die Aufgabe zugrunde, die durch Schwermetallionen hervorgerufene Betriebsstörung bei der Chlor-Alkali-Elektrolyse zu vermeiden. Diese Aufgabe wurde gemäß der Patentansprüche gelöst. Sie gelang in Form einer Mitfällung der störenden Spuren an Eisenoxidhydrat.

Das Prinzip, Spuren schwerer fällbarer Stoffe durch Mitfällung zu erfassen, ist aus der Radio- und Kernchemie und aus anderen Gebieten bekannt [Kirk Othmer (3.), 19, 692 - 228]. In der Wasser/Abwasserchemie ist die Mitfällung von Schwermetallspuren Stand der Technik [Ullmann (4.) 6, 441 ff.]. Speziell wird etwa in der Environmental Science & Technology [(9.) 8, 744 ff.] berichtet, daß der Molybdängehalt eines Flußwassers durch Fällung bei pH-Werten zwischen 3 und 4 um 95 % auf 0,05 ppm erniedrigt werden konnte.

Überraschend wurde nun gefunden, daß auch für den Fall einer hohen Salzbelastung der von den Schwermetallspuren zu befreienden wäßrigen Phase eine mehr als ausreichende Absenkung der störenden Konzentrationen möglich ist. Dieses war für den Fachmann nicht naheliegend, da aufgrund der hohen Ionenstärke der Eisenoxidhydratausfällung die Bedingungen nicht mit denen vergleichbar sind, welche bei der Fällung aus verdünnten, mit Schadstoffen belasteten Abwässern gegeben sind.

Die störenden Metallsalze werden durch das erfindungsgemäße Verfahren bis in den Bereich der Nachweisgrenze von 0,01 ppm aus der Alkalichloridlösung, bevorzugt Natrium- bzw. Kaliumchloridlösung, entfernt. Als Fällungsmittel wird dabei ein Eisen-(III)-salz, bevorzugt Eisen-(III)-chlorid im sauren pH-Bereich zwischen 5 und 2, bevorzugt zwischen 5 und 3 eingesetzt. Der sich bildende Niederschlag wird abfiltriert.

### Beispiel:

Eine pH 5 saure Natronsole (24,5 Gew.-% NaCl) mit einem eingewogenen Molybdängehalt von 0,4 ppm wird mit Eisen-(III)-chloridlösung (40 Gew.-% FeCl₃) bis zum Erreichen von pH 3 versetzt.

Hierfür werden pro Liter Vorlage ca. 0,5 ml benötigt.

Es bildet sich ein brauner Niederschlag aus Eisenoxidhydrat, der im Verlauf seiner Alterung mittelgroße Flocken bildet und sich leicht abfiltrieren läßt.

Im Filtrat liegt der Molybdänrestgehalt unterhalb der Nachweisgrenze von 0,01 ppm Mo. In Sole gelöstes Chlor stört den Reinigungsprozeß nicht.

## Patentansprüche

1. Verfahren zur Entfernung von Schwermetallspuren der Elemente Vanadium, Molybdän, Chrom, Nickel und Wolfram aus konzentrierter Alkalichloridlösung bis in den Bereich der Nachweisgrenze,
dadurch gekennzeichnet,
daß die störenden Metallsalze aus der Alkalichloridlösung durch Zugabe von Eisen-Salzlösung im sauren pH-Bereich mitgefällt an Eisenoxidhydrat und als Feststoff abgetrennt werden.

2. Verfahren nach Anspruch 1,
dadurch gekennzeichnet,
daß als Fällungsmittel Eisen-(III)-salze eingesetzt werden.

3. Verfahren nach Anspruch 1,
dadurch gekennzeichnet,
daß die Zudosierung des Fällungsmittels zu einer sauren Alkalichloridlösung erfolgt.

4. Verfahren nach Anspruch 1,
dadurch gekennzeichnet,
daß die Zugabe des Fällungsmittels pH-kontrolliert erfolgt.

5. Verfahren nach Anspruch 1,
dadurch gekennzeichnet,
daß die Zugabe des Fällungsmittels im pH-Bereich zwischen 5 und 2 beendet wird.

## Claims

1. A method for removing heavy metal traces of the elements vanadium, molybdenum, chromium, nickel and tungsten from concentrated alkali metal chloride solution down into the detection limit range,
characterized in that
the troublesome metal salts are coprecipitated from the alkali metal chloride solution in the acidic pH range on iron oxide hydrate by the addition of iron salt solution and are isolated as a solid material.

2. A method according to claim 1,
characterized in that
iron (III) salts are used as the precipitant.

3. A method according to claim 1,
characterized in that
the precipitant is metered into an acidic alkali metal chloride solution.

4. A method according to claim 1,
characterized in that
the addition of the precipitant takes place with pH monitoring.

5. A method according to claim 1,
characterized in that
the addition of the precipitant is terminated in the pH range from 5 to 2.

## Revendications

1. Procédé d'élimination de traces de métaux lourds des éléments vanadium, molybdène, chrome, nickel, et tungstène, d'une solution concentrée de chlorure de métal alcalin jusque dans la limite de détection,
caractérisé en ce que
les sels métalliques gênants de la solution de chlorure de métal alcalin, par addition de solution de sel de fer en zone de pH acide, sont coprécipités en hydrates d'oxyde de fer, et sont séparés sous forme de matière solide.

2. Procédé selon la revendication 1,
caractérisé en ce qu'
on met en oeuvre comme agent de précipitation des sels de fer (III).

3. Procédé selon la revendication 1,
caractérisé en ce que
l'addition dosée de l'agent de précipitation s'effectue sur une solution acide de chlorure de métal alcalin.

4. Procédé selon la revendication 1,
caractérisé en ce que
l'addition de l'agent de précipitation s'effectue d'une manière contrôlée par le pH.

5. Procédé selon la revendication 1,
caractérisé en ce que
l'addition de l'agent de précipitation est achevée dans une zone de pH comprise entre 5 et 2.
